# EUROPÄISCHE PATENTSCHRIFT

(11) **EP 2 202 439 B1**
(45) Veröffentlichungstag und Bekanntmachung des Hinweises auf die Patenterteilung: **13.04.2011**
(21) Anmeldenummer: 09014589.7
(22) Anmeldetag: 24.11.2009
(51) Int. Cl.: F16L 19/08

(54) **Klemmverschraubung zum Befestigen von länglichen Körpen oder Rohren**
Threaded clamp connection for mounting elongated objects or tubes
Raccord à manchon de compression destiné à fixer des corps longitudinaux ou des tuyaux

(30) Priorität: 23.12.2008 DE 102008062823
(43) Veröffentlichungstag der Anmeldung: 30.06.2010
(73) Patentinhaber: HUMMEL AG, 79211 Denzlingen (DE)
(72) Erfinder: Zügel, Fritz, 79183 Waldkirch (DE); Gerber, Philipp, 79261 Gutach (DE); Haller, Stefan, 79263 Simonswald (DE); Hagen, Lynn, 79353 Bahlingen (DE)
(74) Vertreter: Maucher, Wolfgang

(56) Entgegenhaltungen:
- DE-A1- 4 212 771
- DE-B4- 19 607 784

## Beschreibung

Die Erfindung betrifft eine Klemmverschraubung zum Befestigen von länglichen Körpern oder Rohren oder Metallrohren mit einem den länglichen Körper außenseitig umgreifenden und in Gebrauchs-Stellung mit Druck beaufschlagenden Klemmring, mit einer den Klemmring beim Anziehen ihres Gewindes an den länglichen Körper andrückenden, gegebenenfalls verformenden Überwurfmutter, mit einem stirnseitig an dem Klemmring im Inneren der Klemmverschraubung angeordneten Druckring und mit einer von dem Druckring gehaltenen, insbesondere zumindest teilweise koaxialen Dichtung.

Eine derartige Klemmverschraubung ist in zahlreichen Variationen bekannt und dient dazu, einen länglichen Körper, in der Regel ein Rohr oder Metallrohr bei seiner Befestigung gut abzudichten und/oder festzulegen.

Eine vergleichbare Klemmverschraubung ist aus DE 196 07 784 B4 bekannt. Darin ist eine relativ aufwendige Anordnung offenbart, bei welcher ein überwindbarer Anschlag eine Doppelfunktion hat, weil er in einer ersten Stellung den Druckring innerhalb der Überwurfmutter lose festlegen kann, um ein Auseinanderfallen der Einzelteile vor der Montage zu verhindern, während er in Gebrauchs-Stellung als Anschlag wirkt. Dabei ist jedoch die Vormontagestellung leicht lösbar, so dass eine Trennung vor der Montage nicht ausgeschlossen ist.

Der Erfindung liegt die Aufgabe zu Grunde, eine Klemmverschraubung der eingangs genannten Art zu schaffen, bei welcher der die Dichtung haltende Druckring und der Klemmring in einer ersten Stellung schon unverlierbar miteinander verbunden werden können, bevor die eigentliche Montage beginnt.

Zur Lösung dieser Aufgabe ist die eingangs definierte Klemmverschraubung dadurch gekennzeichnet, dass der Druckring einen an seiner Außenseite umlaufenden, sich entgegen der relativen Einsteckrichtung in axialer Richtung konisch verbreiternden und in seinem Durchmesser vergrößernden Ringbund aufweist und dass die Überwurfmutter innenseitig in ihrem Bereich zwischen ihrem Gewinde und dem axialen Ende ihrer gegenüber der Durchtrittsöffnung für den länglichen Körper radial vergrößerten Innenausnehmung einen innenseitig umlaufenden Ringvorsprung hat, dessen Durchgangsfläche sich in Einsteckrichtung des Druckringes konisch verengt, wobei der kleinste Durchmesser des Ringbundes des Druckringes kleiner als das größte Maß des Ringvorsprungs in der Überwurfmutter ist und der größte Durchmesser des Ringbundes größer als das kleinste Innenmaß an dem Ringbund ist, und dass der Ringbund des Druckringes in Gebrauchs-Stellung den Ringvorsprung der Überwurfmutter hintergreift und mit diesem eine Schnappverbindung bildet.

Auf diese Weise ist es möglich, Überwurfmutter und Druckring zusammenzustecken und den konischen Ringbund des Druckringes in den negativen Konus des Druckringes einzuführen und durch einen vergrößerten axialen Druck dahinter einschnappen zu lassen, wodurch die beiden Teile zwar in axialer Richtung noch in einem gewissen Bereich relativ zueinander bewegbar aber unverlierbar miteinander verbunden sind. Dabei wird diese gegenseitige Schnappverbindung für den Benutzer dadurch leicht herstellbar, dass zwei Konusflächen zunächst ineinander gesteckt werden können, so dass schon eine erste Ausrichtung und Zentrierung vorhanden ist, wonach dann durch eine erhöhte Kraft in Einsteckrichtung eine gewisse Materialverformung oder -verdrängung erfolgt und der eigentliche Einschnappvorgang durchgeführt werden kann.

Besonders günstig ist es dabei, wenn der Ringbund sich von dem stirnseitigen Rand der in Einsteckrichtung vorderen Stirnseite des Druckringes ausgehend in axialer Richtung konisch erweitert oder nahe diesem Rand angeordnet ist. Somit gelangt der Druckring bei dem axialen Zusammenstecken mit der Überwurfmutter und mit deren innen angeordneten Ringvorsprung schon sehr früh in Kontakt und kann schon nach einer relativ gering bemessenen Einsteck-Strecke unverlierbar befestigt werden. Der Ringbund kann den Ringvorsprung in der Überwurfmutter schon hintergreifen, wenn noch der größte Teil des Druckringes in Einsteckrichtung vor diesem Ringvorsprung angeordnet ist.

Der konische Ringbund des Druckringes kann eine größere axiale Abmessung als der Ringvorsprung innerhalb der Überwurfmutter haben. Somit kann er gezielt in die Öffnung des Ringvorsprungs eingeführt und zentriert werden, bevor die Schnappverbindung hergestellt wird.

Besonders günstig ist es für die Verrastung bzw. die Herstellung der Schnappverbindung zwischen der Außenseite des Druckringes und dem inneren Ringvorsprung der Überwurfmutter, wenn der konische Ringbund beim axialen Zusammenstecken mit dem Ringvorsprung diesen in Steckrichtung überragt, bevor sein größer bemessener Durchmesser oder Umfang den Innendurchmesser oder Innenumfang des Ringvorsprungs verformt. Der Ringbund durchsetzt dann bereits den Ringvorsprung, bevor es zum endgültigen Durchtritt des Ringvorsprungs durch den Ringbund und zu der damit einhergehenden Verformung kommt und bevor die Schnappverbindung hergestellt wird.

Die Abmessungen von Ringbund und Ringvorsprung können so gewählt sein, dass das in Einsteckrichtung rückwärtige Ende des Ringbundes im Bereich seines größeren Durchmessers etwa bündig mit der dem Gewinde zugewandten Unterseite des Ringvorsprunges der Überwurfmutter ist, bevor bei einer weiteren axialen Steckbewegung die erhöhte Kraft für die Verformung und für die Schnappverbindung angebracht wird. Bei größerer axialer Abmessung des Ringbundes gegenüber dem Ringvorsprung greift also der Ringbund zunächst schon durch den Ringvorsprung hindurch und überragt ihn in Steckrichtung, wird aber erst im letzten Teil der Steckbewegung bei seinem vollständigen Durchtritt durch den Ringbund wirksam.

Der Druckring kann in axialer Richtung beabstandet zu seinem konischen Ringbund einen Anschlag haben, der in axialer Richtung als Festanschlag an dem Ringvorsprung dienen kann. Umgekehrt kann dadurch die Überwurfmutter an dem Druckring anschlagen und hinsichtlich ihrer axialen Verstellbewegung begrenzt werden, so dass es nicht zu Überlastungen des Klemmringes und/oder der Dichtung kommen kann.

Die Schrägungswinkel einerseits des konischen Ringbundes und andererseits der konischen Durchgangsfläche des Ringvorsprunges können verschieden sein. Auch dadurch kann das Einstecken des Druckringes in den Ringvorsprung oder umgekehrt das Aufstecken des Ringvorsprunges auf den Ringbund erleichtert werden.

Günstig ist es dabei vor allem, wenn der Schrägungswinkel des Ringbundes relativ zu der Längsachse kleiner als der Konuswinkel an dem Ringvorsprung ist. Der Ringbund kann somit relativ zu dem Ringvorsprung oder umgekehrt der Ringvorsprung relativ zu dem Ringbund in axialer Richtung zunächst nahezu berührungslos verschoben werden, bevor die beiden Flächen in Berührkontakt zueinander gelangen. Dies geschieht erst, wenn der Ringbund schon teilweise durch den Ringvorsprung hindurch bewegt ist oder umgekehrt die Überwurfmutter mit dem Ringbund über einen Teil der axialen Erstreckung des Ringbundes aufgesteckt ist.

Eine vorteilhafte Ausgestaltung der Erfindung beispielsweise für paarweise verlaufende Rohre kann vorsehen, dass die erfindungsgemäße Klemmverschraubung mit wenigstens einer weiteren Klemmverschraubung dadurch verbunden ist, dass ein weiteres Gewindeteil für eine Überwurfmutter mit dem ersten Gewindeteil für die erste Überwurfmutter verbunden ist. Dabei ist es besonders vorteilhaft, wenn die weitere Klemmverschraubung ebenfalls wie die erste Klemmverschraubung ausgebildet ist, also einen Druckring mit einem konischen Ringbund und eine Überwurfmutter mit einem Innenring mit konischer Durchgangsöffnung hat.

Als Verbindung der Klemmverschraubung mit wenigstens einer weiteren Klemmverschraubung kann zumindest ein Abstandhalter vorgesehen sein. Dabei ist es für parallel laufende Rohre zweckmäßig, wenn die Längsmittelachse der Klemmverschraubung und die Längsmittelachse der wenigstens einen weiteren Klemmverschraubung parallel zueinander angeordnet sind und insbesondere die Größe des Abstandhalters den Abstand der parallelen Rohre berücksichtigt.

Vor allem bei Kombination einzelner oder mehrerer der vorbeschriebenen Merkmale und Maßnahmen ergibt sich eine Klemmverschraubung, deren Druckring mit der Überwurfmutter schon vor der Montage an einem Gewindeteil oder an einer Rohrkupplung mit Gewinde unverlierbar verbunden sein kann, trotzdem dann aber noch eine axiale Relativbewegung zwischen Überwurfmutter und Druckring erlaubt, so dass die Überwurfmutter in üblicher Weise mit ihrem Innengewinde an dem Gegengewinde des Gewindeteils oder dergleichen angreifen und damit verschraubt werden kann, um einen Klemmring an einem zu haltenden länglichen Körper anzudrücken und diesen dadurch festzulegen. Die Unverlierbarkeit des Druckringes relativ zur Überwurfmutter wird dabei durch eine Schnappverbindung bewirkt, wobei der im Inneren der Überwurfmutter angeordnete Ringvorsprung gleichzeitig auch noch als axialer Anschlag zur Begrenzung des Schraubweges ausgenutzt werden kann, sofern nicht die Stirnseite des Druckringes mit dem Ende der Innenhöhlung der Überwurfmutter dieses Anschlag bilden soll.

Nachstehend sind Ausführungsbeispiele der Erfindung anhand der Zeichnung näher beschrieben. Es zeigt in zum Teil schematisierter Darstellung:
- Fig. 1:: Längsschnitt durch eine erfindungsgemäße Klemmver- schraubung ohne den damit zu befestigenden läng- lichen Körper, insbesondere ein Rohr, mit einem Klemmring, einer diesen beim Verschrauben verfor- menden und an den zu befestigenden Körper an- drückenden Überwurfmutter, einen in Gebrauchs- Stellung im Inneren der Überwurfmutter angeordneten Druckring und einer von dem Druckring gehaltenen Dichtung vor der Herstellung einer Vormontage- stellung, in welcher der Druckring unverlierbar in der Überwurfmutter festgelegt wird,
- Fig. 2:: In vergrößertem Maßstab die in Figur 1 durch einen Kreis markierte Einzelheit,
- Fig. 3:: eine der Figur 1 entsprechende Darstellung der er- findungsgemäßen Klemmverschraubung nach der Bildung einer Schnappverbindung zwischen Druckring und Überwurfmutter für die unverlierbare Festlegung des Druckringes in der Überwurfmutter,
- Fig. 4:: in vergrößertem Maßstab die in Figur 3 durch eine unterbrochene Kreislinie markierte Einzelheit,
- Fig. 5:: die Montage eines länglichen Körpers in Form eines Rohres mit Hilfe der erfindungsgemäßen Klemmver- schraubung an einem Gewindeteil oder Gegenstück mit zum Innengewinde der Überwurfmutter passenden Außengewinde, beispielsweise an einer Rohrkupplung nach dem Einstecken des länglichen Körpers in die- ses Gegenstück und vor dem Verschrauben mit der Überwurfmutter,
- Fig. 6:: in vergrößertem Maßstab die in Figur 5 durch einen Kreis markierte Einzelheit bevor der Klemmring durch eine konische Durchtrittsöffnung an der Über- wurfmutter beaufschlagt und an den länglichen Kör- per angedrückt wird, sowie
- Fig. 7:: in schematisierter Darstellung die Möglichkeit, eine erfindungsgemäße Klemmverschraubung mit einer weiteren vorzugsweise parallelen derartigen Klemm- verschraubung zu verbinden bzw. in verbundener An- ordnung anzuwenden.

Eine im Ganzen mit 1 bezeichnete Klemmverschraubung dient zum Befestigen von länglichen Körpern, beispielsweise zum Befestigen eines Rohres 2 oder eines Metallrohres an einem Gegenstück 3, welches ein Außengewinde 4 hat.

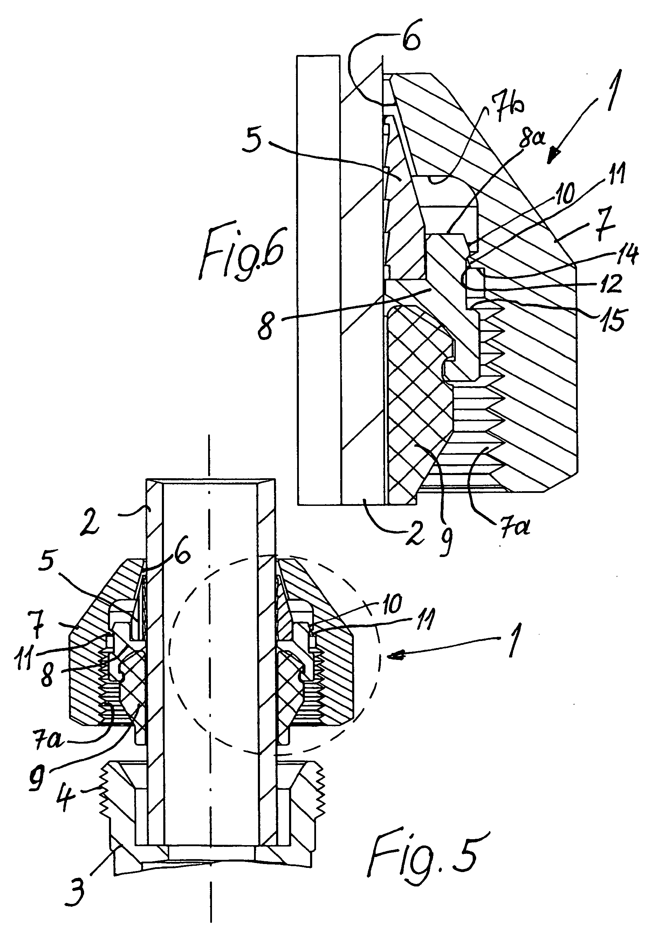

Zu der Klemmverschraubung 1 gehört ein den länglichen Körper oder das Rohr in Gebrauchs-Stellung gemäß Figur 5 und 6 außenseitig umgreifender und mit Druck beaufschlagender Klemmring 5, der in den Figuren 5 und 6 aber noch vor seiner Verklemmung dargestellt ist. Dieser Klemmring hat außenseitig eine kegelstumpfförmige oder konische Oberfläche, die in Gebrauchs-Stellung von einem Innenkonus 6 an der Durchgangsöffnung einer Überwurfmutter 7 beaufschlagt wird. Wird diese Überwurfmutter 7 mit ihrem Innengewinde 7a auf das Außengewinde 4 des Gegenstücks 3 aufgeschraubt und dadurch in axialer Richtung relativ zu dem Klemmring 5 verstellt, gelangt der Innenkonus 6 der Überwurfmutter 7 auf die konische Außenseite des Klemmringes 5 und kann diesen radial gegen das Rohr 2 andrücken.

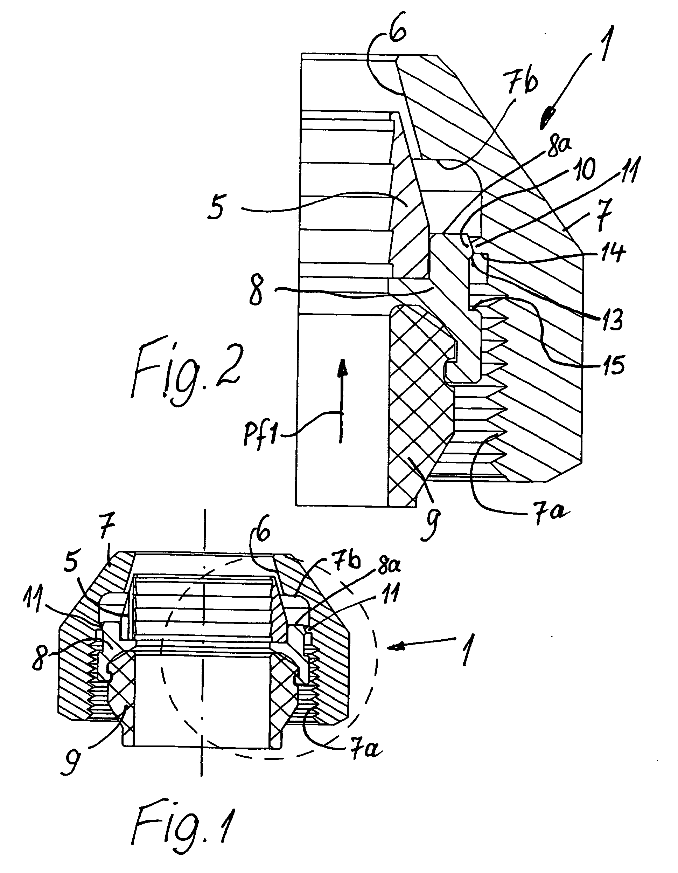

Zu der Klemmverschraubung 1 gehört außerdem ein stirnseitig an dem Klemmring 5 im Inneren der Überwurfmutter 7 angeordneter Druckring 8 und eine von dem Druckring 8 an einer Ausnehmung gehaltene Dichtung 9. Vor allem in den Figuren 2, 4 und 6 ist diese gegenseitige Zuordnung der Überwurfmutter 7, des von deren an der Durchgangsöffnung befindlichen Innenkonus 6 beaufschlagter Klemmring 5, der an der dem Konus des Klemmringes 5 abgewandten Seite angeordnete Druckring 8 und die Dichtung9 in ihrem Zusammenwirken gut zu erkennen.

Ebenfalls in den Figuren 2, 4 und 6 ist dargestellt, dass der Druckring 8 einen an seiner Außenseite umlaufenden, sich entgegen der relativen Einsteckrichtung in axialer Richtung konisch verbreiternden und in seinem Durchmesser vergrößernden Ringbund 10 aufweist, wobei die relative Einsteckrichtung in Figur 2 durch den Pfeil Pf 1 angedeutet ist. Der Druckring 8 kann in dieser Richtung in die Überwurfmutter 7 eingesteckt werden, es kann jedoch auch die Überwurfmutter 7 in umgekehrter Richtung auf den Druckring 8 und die von diesem gehaltene Dichtung 9 aufgeschoben oder aufgesteckt werden.

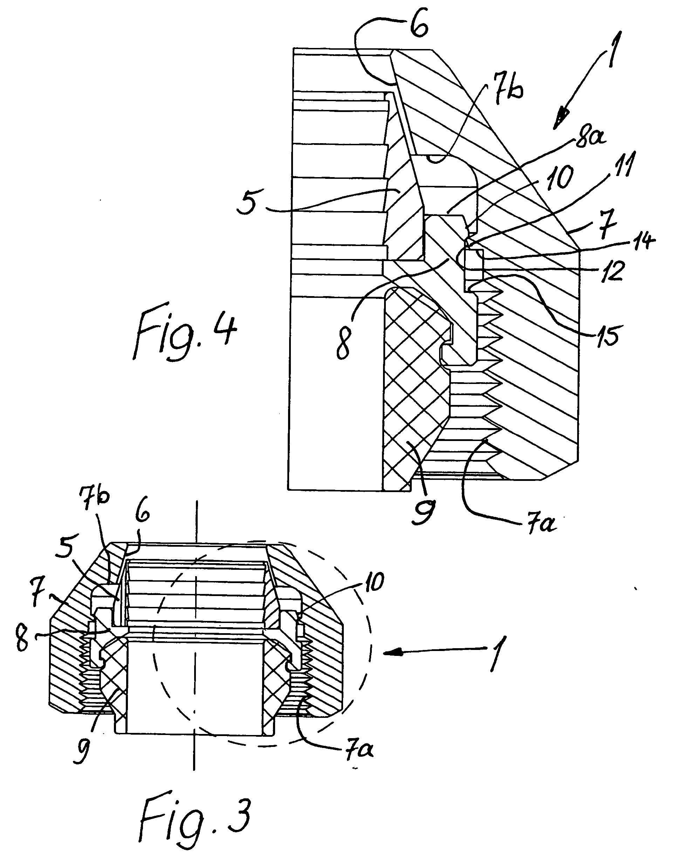

Die Überwurfmutter 7 weist innenseitig in ihrem Höhlungsbereich zwischen ihrem Gewinde 7a und dem axialen Ende 7b ihrer Innenhöhlung oder Innenausnehmung einen innenseitig in einer Durchmesserebene umlaufenden Ringvorsprung 11 auf, dessen axiale ringförmige Durchgangsfläche 12 insbesondere gemäß den Figuren 4 und 6 sich in axialer Richtung, also in Einsteckrichtung des Druckringes 8 konisch verengt. Der Ringsvorsprung 11 hat also innenseitig eine sich verjüngende Ringfläche, das heißt der Durchgang durch den Ringvorsprung 11 wird in Einsteckrichtung, also in Richtung des Pfeils Pf 1 enger.

Dabei erkennt man, dass der kleinste Durchmesser des Ringbundes 10 des Druckringes 8 kleiner als das größte Innenmaß des Ringvorsprungs 11 beziehungsweise seiner Durchgangsfläche 12 ist. Dies wird besonders deutlich anhand der Figur 2, in welcher nämlich der Ringbund 10 bereits in die Durchgangsöffnung des Ringvorsprungs 11 eingeschoben oder der Ringvorsprung 11 auf den Ringbund 10 aufgesteckt ist und sich die Außenseite des Ringbundes 10 und die Innenseite oder Durchgangsfläche 12 des Ringvorsprungs 11 zumindest stellenweise berühren. Gleichzeitig ist der größte Durchmesser des Ringbundes 10 größer als das kleinste Innenmaß an dem Ringvorsprung 11, so dass gemäß Figur 2 zunächst ein Widerstand gegen eine weitere gegenseitige Verschiebung von Ringbund 10 und Ringvorsprung 11 vorhanden ist.

Wird jedoch die Steckkraft groß genug gewählt, kann der Ringbund 10 aus der in Figur 2 dargestellten Position in die in Figur 4 dargestellte Lage gelangen, in welcher der Ringbund 10 den Ringvorsprung 11 hintergreift und mit diesem eine Schnappverbindung bilden.

Die Abmessungen sind so gewählt, dass der bei der Anordnung gemäß Figur 2 vorhandene Widerstand gegen ein Zusammenstecken gemäß den Pfeil Pf 1 von einem Benutzer überwunden werden kann, wobei sich gewisse Verformungen oder Materialverdrängungen ergeben, die aber im Hinblick auf die geringen Maßunterschiede zwischen dem größten Durchmesser des Ringbundes 10 und dem kleinsten Innendurchmesser des Ringvorsprungs 11 nicht groß sind und sich im Wesentlichen zurückverformen können.

Die beschriebene Schnappverbindung sorgt dafür, dass der Druckring 8 und damit auch der Klemmring 5 sowie die von dem Druckring 8 gehaltene Dichtung 9 schon vor der Montage der Klemmverschraubung 1 unverlierbar in der Überwurfmutter 7 festgelegt werden.

Der Ringbund 10 geht von dem stirnseitigen Rand der vorderen Stirnseite des Druckringes 8 aus und erstreckt sich, sich konisch erweiternd, in axialer Richtung. Man erkennt deutlich, dass dadurch das in Einsteckrichtung vordere Ende mit der dort befindlichen Stirnseite 8a des Druckringes 8 konisch erweitert und dann hinter dem Ringbund 10 wieder auf ein kleineres Durchmessermaß zurückspringt. Somit hat der Ringbund 8 eine dem Gewinde 7a der Überwurfmutter 7 zugewandte Unterseite 13, die in einer Radialebene liegen könnte, im Ausführungsbeispiel aber etwas schräg dazu verläuft, so dass gegebenenfalls mit erhöhter Zugkraft die Schnappverbindung gelöst werden könnte.

Beim Zusammenstecken von Überwurfmutter 7 und Druckring 8 erfolgt also gleich bei der ersten gegenseitigen Durchdringung der Eintritt des Ringbundes 10 in den Ringvorsprung 11, wie es in den Figuren 1 und 2 dargestellt ist.

In allen Figuren erkennt man, dass der konische Ringbund 10 des Druckringes 8 eine größere axiale Abmessung als der Ringvorsprung 11 innerhalb der Überwurfmutter 7 hat, das heißt die axiale Abmessung des Ringbundes 10 ist größer als die axiale Dicke des Ringvorsprunges 11.

Denkbar wäre aber auch, dass der Ringvorsprung 11 in Richtung zu dem Innengewinde 7a der Überwurfmutter 7 im Anschluss an seine konische Durchgangsfläche 12 noch eine Vergrößerung seiner Dicke hat oder insgesamt eine größere axiale Abmessung aufweist.

Im Ausführungsbeispiel sind die Abmessungen so gewählt, dass der konische Ringbund 10 beim axialen Zusammenstecken mit dem Ringvorsprung 11 diesen in Steckrichtung überragt, bevor sein größer bemessener Durchmesser oder Umfang den Innendurchmesser oder Innenumfang des Ringvorsprungs 11 zur Bildung der Schnappverbindung etwas verformt. Diese Anordnung kurz vor dem Einschnappen des Druckringes 8 in der Überwurfmutter 7 ist in den Figuren 1 und 2 dargestellt. Da in dieser Position der Ringbund 10 den Ringvorsprung 11 innenseitig in axialer Richtung schon etwas überragt, wird bei dieser Steckbewegung zunächst eine gute gegenseitige Zentrierung und Ausrichtung erreicht, bevor der erhöhte Kraftaufwand in Steckrichtung zur Bildung der Schnappverbindung erforderlich wird. Diese erhöhte Kraft wird also erst aufgewendet, wenn die zusammenzusteckenden Teile eine optimale gegenseitige Position in Einsteckrichtung haben.

Dabei erkennt man in den Figuren 1 und 2 ebenfalls, dass die Abmessungen von Ringbund 10 und Ringvorsprung 11 in axialer Richtung so gewählt sind, dass das Ende oder die Unterseite 13 des Ringbundes 10 im Bereich seines größten Durchmessers etwa bündig mit der dem Gewinde 7a zugewandten Unterseite 14 des Ringvorsprunges 11 der Überwurfmutter 7 ist, bevor bei einer weiteren axialen Steckbewegung die erhöhte Kraft für die Verformung zur Herbeiführung der Schnappverbindung aufgewandt wird.

Der Druckring 8 weist in axialer Richtung beabstandet zu seinem konischen Ringbund 10 und seiner Unterseite 13 einen Anschlag 15 auf, der in axialer Richtung als Festanschlag an dem Ringvorsprung 11 und dessen Unterseite 14 dienen kann. Man erkennt anhand der Figur 4, dass es möglich ist, den Druckring 8 relativ zu der Überwurfmutter 7 weiter in axialer Richtung, also in Richtung des Pfeils Pf 1 zu bewegen beziehungsweise umgekehrt die Überwurfmutter 7 relativ zu dem Druckring 8 entgegen der Richtung des Pfeils Pf 1 zu bewegen, was erforderlich ist, um den Klemmring 5 außenseitig zu beaufschlagen und radial zusammenzudrücken. Dabei ist der Weg der Überwurfmutter durch den erwähnten Festanschlag begrenzt, so dass die Überwurfmutter 7 nur um einen vorgegebenen Weg axial verstellt werden kann.

Es sei noch erwähnt, dass die Schrägungswinkel einerseits des konischen Ringbundes 10 und andererseits der konischen Durchgangsfläche 12 des Ringvorsprungs 11 verschieden sein können, wobei zweckmäßigerweise der Schrägungswinkel des Ringbundes 10 relativ zu der Längsachse der Klemmverschraubung 1 kleiner als der Konuswinkel an dem Ringvorsprung 11 sein kann. Somit wird das Einschieben des Ringbundes 10 in die Durchgangsfläche 12 beziehungsweise das Aufstecken dieser Durchgangsfläche 12 auf den Ringbund 10 erleichtert.

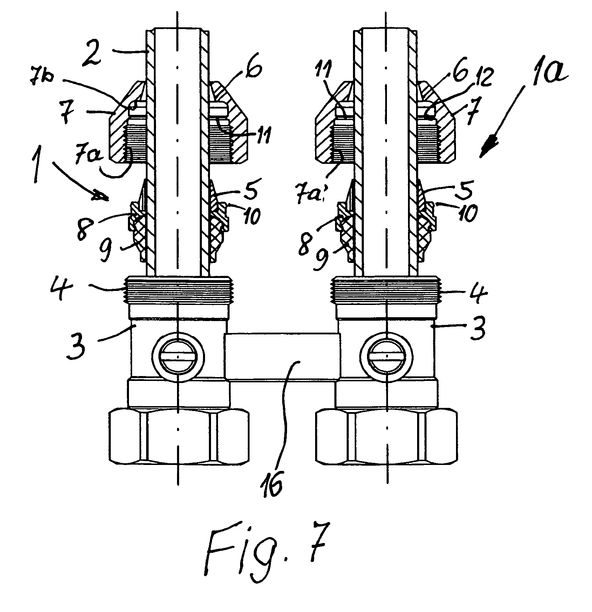

In Figur 7 ist noch angedeutet, dass die Klemmverschraubung 1 mit wenigstens einer weiteren Klemmverschraubung 1a verbunden sein kann und zwar dadurch, dass ein weiteres Gegenstück oder Gewindeteil 3 für eine Überwurfmutter 7 mit dem ersten Gewindeteil 3 für die erste Überwurfmutter 7 verbunden ist und zwar mit zumindest einem Abstandhalter 16. Die Klemmverschraubungen 1 und 1a können dabei identisch ausgebildet sein. Dabei ist in Figur 7 eine Ausführungsform gezeigt, bei welcher die Längsmittelachsen der Klemmverschraubungen 1 und 1a parallel zueinander angeordnet sind, so dass mit dieser Anordnung zwei parallele Rohre 2 in der dargestellten Weise erfasst und an den Gewindegegenstücken 3 befestigt werden können.

Die Klemmverschraubung 1 zum Befestigen von länglichen Körpern, bevorzugt von Rohren 2, weist einen den länglichen Körper außenseitig umgreifenden und in Gebrauchs-Stellung mit Druck beaufschlagenden Klemmring 5 für die Festlegung des länglichen Körpers auf. Für das Andrücken des Klemmringes 5 an dem länglichen Körper ist eine Überwurfmutter 7 mit einem Innenkonus 6 vorgesehen, die die konische Außenseite des Klemmringes 5 beaufschlagt und bei axialer Verschraubung mit einem Gegenstück 3 radial zusammendrückt. Ferner enthält die Klemmverschraubung 1 eine Dichtung 9, die von einem Druckring 8 gehalten und in Gebrauchs-Stellung axial zusammengedrückt und dadurch wirksam gemacht ist. Der Druckring 8 hat an seiner Außenseite einen sich konisch erweiternden Ringbund 10, der mit einem im Inneren der Überwurfmutter 7 befindlichen Ringvorsprung 11 in zusammengesteckter Lage eine Schnappverbindung bildet, so dass der Druckring 8, der Klemmring 5 und die Dichtung 9 schon vor der Montage unverlierbar miteinander verbunden sind.

## Patentansprüche

1. Klemmverschraubung (1) zum Befestigen von länglichen Körpern oder Rohren (2) oder Metallrohren mit einem den länglichen Körper außenseitlich umgreifenden und in Gebrauchs-Stellung mit Druck beaufschlagenden Klemmring (5), mit einer den Klemmring (5) beim Anziehen ihres Gewindes (7a) an den länglichen Körper (2) andrückenden Überwurfmutter (7), mit einem stirnseitig an dem Klemmring (5) im Inneren der Klemmverschraubung (1) angeordneten Druckring (8) und mit einer von dem Druckring (8) gehaltenen Dichtung (9), **dadurch gekennzeichnet, dass** der Druckring (8) einen an seiner Außenseite umlaufenden, sich entgegen der relativen Einsteckrichtung in axialer Richtung konisch verbreiternden und in seinem Durchmesser vergrößernden Ringbund (10) aufweist und dass die Überwurfmutter (7) innenseitig in ihrem Bereich zwischen ihrem Gewinde (7a) und dem axialen Ende (7b) ihrer Innenausnehmung einen innenseitig umlaufenden Ringvorsprung (11) hat, dessen Durchgangsfläche (12) sich in Einsteckrichtung des Druckringes (8) konisch verengt, wobei der kleinste Durchmesser des Ringbundes (10) des Druckringes (8) kleiner als das größte Maß des Ringvorsprungs (11) in der Überwurfmutter (7) ist und der größte Durchmesser des Ringbundes (10) größer als das kleinste Innenmaß an dem Ringvorsprung (11) ist, und dass der Ringbund (10) des Druckringes (8) in Gebrauchs-Stellung den Ringvorsprung (11) der Überwurfmutter (7) hintergreift und mit diesem eine Schnappverbindung bildet.

2. Klemmverschraubung nach Anspruch 1, **dadurch gekennzeichnet, dass** der Ringbund (10) sich von dem stirnseitigen Rand der in Einsteckrichtung vorderen Stirnseite (8a) des Druckrings (8) ausgehend in axialer Richtung konisch erweitert oder nah bei diesem Rand angeordnet ist.

3. Klemmverschraubung nach Anspruch 1 oder 2, durch **gekennzeichnet**, dass der konische Ringbund (10) des Druckringes (8) eine größere axiale Abmessung als der Ringvorsprung (11) innerhalb der Überwurfmutter (7) hat.

4. Klemmverschraubung nach einem der Ansprüche 1 bis 3, **dadurch gekennzeichnet, dass** der konische Ringbund (10) beim axialen Zusammenstecken mit dem Ringvorsprung (11) diesen in Steckrichtung überragt, bevor sein größer bemessener Durchmesser oder Umfang den Innendurchmesser oder Innenumfang des Ringvorsprungs (11) verformt.

5. Klemmverschraubung nach einem der Ansprüche 1 bis 4, **dadurch gekennzeichnet, dass** die Abmessungen von Ringbund (11) und Ringvorsprung (11) so gewählt sind, dass das Ende des Ringbundes (10) im Bereich seines größten Durchmessers etwa bündig mit der dem Gewinde (7a) zugewandten Unterseite (14) des Ringvorsprungs (11) der Überwurfmutter (7) ist, bevor bei einer weiteren axialen Steckbewegung die erhöhte Kraft für die Verformung für die Schnappverbindung auftritt.

6. Klemmverschraubung nach einem der Ansprüche 1 bis 5, **dadurch gekennzeichnet, dass** der Druckring (8) in axialer Richtung beabstandet zu seinem konischen Ringbund (10) einen Anschlag (15) hat, der in axialer Richtung als Festanschlag an den Ringvorsprung dient.

7. Klemmverschraubung nach einem der Ansprüche 1 bis 6, **dadurch gekennzeichnet, dass** die Schrägungswinkel einerseits des konischen Ringbundes (10) und andererseits der konischen Durchgangsfläche (12) des Ringvorsprunges (11) verschieden sind.

8. Klemmverschraubung nach einem der Ansprüche 1 bis 7, **dadurch gekennzeichnet, dass** der Schrägungswinkel des Ringbundes (10) relativ zu der Längsachse kleiner als der Konuswinkel an dem Ringvorsprung (11) ist.

9. Klemmverschraubung nach einem der Ansprüche 1 bis 8, **dadurch gekennzeichnet, dass** sie mit wenigstens einer weiteren Klemmverschraubung (1a) **dadurch** verbunden ist, dass ein weiteres Gewindeteil (3) für eine Überwurfmutter (7) mit dem ersten Gewindeteil (3) für die erste Überwurfmutter (7) verbunden ist.

10. Klemmverschraubung nach Anspruch 9, **dadurch gekennzeichnet, dass** als Verbindung der Klemmverschraubung (1) mit wenigstens einer weiteren Klemmverschraubung (1a) zumindest ein Abstandhalter (16) vorgesehen ist.

11. Klemmverschraubung nach Anspruch 9 oder 10, **dadurch gekennzeichnet, dass** die Längsmittelachsen der Klemmverschraubung (1) und der wenigstens einen weiteren Klemmverschraubung (1a) parallel zueinander angeordnet sind.

## Claims

1. Threaded clamp connection (1) for mounting elongated objects or tubes (2) or metal pipes, having a clamping ring (5) that externally surrounds the elongated object and acts upon it with pressure in the position of use, having a check nut (7) that presses the clamping ring (5) against the elongated object (2) when its thread (7a) is tightened, having a pressure ring (8) mounted on the end face of the clamping ring (5) inside the threaded clamp connection (1), and having a seal (9) that is held by the pressure ring (8), **characterised in that** the pressure ring (8) comprises an annular flange (10) that encircles it on the outside, widens out conically in the axial direction counter to the relative direction of insertion, and increases in diameter, and **in that** the check nut (7) has on its inside, in the region between its thread (7a) and the axial end (7b) of its inner recess, an annular projection (11) encircling it on the inside, the continuous surface (12) of which tapers conically in the direction of insertion of the pressure ring (8), the smallest diameter of the annular flange (10) of the pressure ring (8) being smaller than the maximum dimension of the annular projection (11) in the check nut (7) and the largest diameter of the annular flange (10) being greater than the smallest internal dimension on the annular projection (11), and **in that** the annular flange (10) of the pressure ring (8) engages behind the annular projection (11) of the check nut (7) in the position of use and forms a snap-fit connection therewith.

2. Threaded clamp connection according to claim 1, **characterised in that** the annular flange (10) widens out conically from the terminal edge of the end face (8a) of the pressure ring (8) that is foremost in the direction of insertion in the axial direction or is disposed close to this edge.

3. Threaded clamp connection according to claim 1 or 2, **characterised in that** the conical annular flange (10) of the pressure ring (8) has a larger axial dimension that the annular projection (11) within the check nut (7).

4. Threaded clamp connection according to one of claims 1 to 3, **characterised in that** as the conical annular flange (10) and the annular projection (11) are fitted together axially, the annular flange (10) projects over the annular projection (11) in the direction of insertion before its larger diameter or circumference deforms the inner diameter or inner circumference of the annular projection (11).

5. Threaded clamp connection according to one of claims 1 to 4, **characterised in that** the dimensions of the annular flange (11) and annular projection (11) are chosen such that the end of the annular flange (10) in the region of its maximum diameter is substantially flush with the underside (14) of the annular projection (11) of the check nut (7) facing the thread (7a), before the increased force for deforming the snap-fit connection is produced during a further axial movement of insertion.

6. Threaded clamp connection according to one of claims 1 to 5, **characterised in that** the pressure ring (8) has at an axial spacing from its conical annular flange (10) an abutment (15) that serves as a fixed abutment against the annular projection in the axial direction.

7. Threaded clamp connection according to one of claims 1 to 6, **characterised in that** the angle of inclination of the conical annular flange (10) on the one hand and that of the conical insertion surface (12) of the annular projection (11) on the other hand are different.

8. Threaded clamp connection according to one of claims 1 to 7, **characterised in that** the angle of inclination of the annular flange (10) relative to the longitudinal axis is less than the cone angle on the annular projection (11).

9. Threaded clamp connection according to one of claims 1 to 8, **characterised in that** it is connected to at least one further threaded clamp connection (1a) by the fact that another threaded portion (3) for a check nut (7) is connected to the first threaded portion (3) for the first check nut (7).

10. Threaded clamp connection according to claim 9, **characterised in that** at least one spacer (16) is provided as the connection of the threaded clamp connection (1) to at least one further threaded clamp connection (1a).

11. Threaded clamp connection according to claim 9 or 10, **characterised in that** the central longitudinal axes of the threaded clamp connection (1) and of the at least one further threaded clamp connection (1a) are arranged parallel to one another.

## Revendications

1. Raccord vissable de blocage (1) destiné à fixer des corps longilignes ou des tuyaux (2), voire des tubulures métalliques, comprenant une bague de coincement (5) qui ceinture extérieurement le corps longiligne et le sollicite par une pression, en position d'utilisation ; un capuchon taraudé (7) pressant ladite bague de coincement (5) contre ledit corps longiligne (2) lors du blocage de son filetage (7a) ; une bague de pression (8) portant frontalement contre ladite bague de coincement (5) dans l'espace interne dudit raccord vissable de blocage (1) ; et une garniture d'étanchement (9) retenue par ladite bague de pression (8), **caractérisé par le fait que** la bague de pression (8) offre un collet annulaire (10) qui, s'étendant à la périphérie de sa face extérieure, présente un élargissement tronconique dans le sens axial et un accroissement de diamètre en sens inverse de la direction d'emboîtement relatif ; **par le fait que** le capuchon taraudé (7) est intérieurement pourvu, dans sa région située entre son filetage (7a) et l'extrémité axiale (7b) de son évidement intérieur, d'une saillie annulaire (11) intérieurement périphérique dont la surface de transition (12) se rétrécit tronconiquement dans la direction d'emboîtement de ladite bague de pression (8), le diamètre minimal dudit collet annulaire (10) de ladite bague de pression (8) étant plus petit que la cote maximale de ladite saillie annulaire (11) dans ledit capuchon taraudé (7), et le diamètre maximal dudit collet annulaire (10) étant plus grand que la cote intérieure minimale, sur ladite saillie annulaire (11) ; et **par le fait que**, dans la position d'utilisation, ledit collet annulaire (10) de ladite bague de pression (8) emprisonne par-dernère ladite saillie annulaire (11) dudit capuchon taraudé (7) avec laquelle il forme une liaison par déclic.

2. Raccord vissable de blocage selon la revendication 1, **caractérisé par le fait que** le collet annulaire (10) s'évase tronconiquement, dans le sens axial, à partir du bord frontal de la face extrême (8a) de la bague de pression (8) qui est située à l'avant dans la direction d'emboîtement, ou est disposé à proximité de ce bord.

3. Raccord vissable de blocage selon la revendication 1 ou 2, **caractérisé par le fait que** le collet annulaire tronconique (10) de la bague de pression (8) présente un plus grand dimensionnement axial que la saillie annulaire (11) à l'intérieur du capuchon taraudé (7).

4. Raccord vissable de blocage selon l'une des revendications 1 à 3, **caractérisé par le fait que**, lors de l'assemblage avec la saillie annulaire (11) par emboîtement axial, le collet annulaire tronconique (10) dépasse au-delà de cette dernière dans la direction d'emboîtement, avant que son diamètre ou son pourtour, de dimensionnement supérieur, déforme le diamètre intérieur ou le pourtour intérieur de ladite saillie annulaire (11).

5. Raccord vissable de blocage selon l'une des revendications 1 à 4, **caractérisé par le fait que** les dimensions du collet annulaire (10) et de la saillie annulaire (11) sont choisies de façon telle que l'extrémité dudit collet annulaire (10) vienne sensiblement à fleur, dans la région de son diamètre maximal, avec la face inférieure (14) de ladite saillie annulaire (11) du capuchon taraudé (7) qui est tournée vers le filetage (7a), avant que la force accrue, assignée à la déformation en vue de la liaison par déclic, soit développée lors d'un mouvement supplémentaire d'emboîtement axial.

6. Raccord vissable de blocage selon l'une des revendications 1 à 5, **caractérisé par le fait que** la bague de pression (8) est axialement pourvue, à distance de son collet annulaire tronconique (10), d'une butée (15) remplissant, dans le sens axial, la fonction d'une butée fixe sur la saillie annulaire.

7. Raccord vissable de blocage selon l'une des revendications 1 à 6, **caractérisé par le fait que**, d'une part, le collet annulaire tronconique (10) et, d'autre part, la surface tronconique de transition (12) de la saillie annulaire (11) possèdent des angles d'obliquité différents.

8. Raccord vissable de blocage selon l'une des revendications 1 à 7, **caractérisé par le fait que** l'angle d'obliquité du collet annulaire (10) est plus petit, par rapport à l'axe longitudinal, que l'angle de conicité sur la saillie annulaire (11).

9. Raccord vissable de blocage selon l'une des revendications 1 à 8, **caractérisé par le fait qu'**il est relié à au moins un raccord vissable de blocage (1a) additionnel en instaurant la liaison d'une pièce filetée supplémentaire (3), dédiée à un capuchon taraudé (7), avec la première pièce filetée (3) dévolue au premier capuchon taraudé (7).

10. Raccord vissable de blocage selon la revendication 9, **caractérisé par le fait qu'**au moins un organe d'espacement (16) est prévu en tant que liaison dudit raccord vissable de blocage (1) avec au moins un raccord vissable de blocage (1a) additionnel.

11. Raccord vissable de blocage selon la revendication 9 ou 10, **caractérisé par le fait que** les axes médians longitudinaux dudit raccord vissable de blocage (1), et du raccord vissable de blocage (1a) additionnel au minimum, sont disposés parallèlement l'un à l'autre.
